# EUROPEAN PATENT SPECIFICATION

(11) **EP 2 661 551 B1**
(45) Date of publication and mention of the grant of the patent: **16.08.2017**
(21) Application number: 11804758.8
(22) Date of filing: 19.12.2011
(51) Int. Cl.: F03D 1/06, B29C 70/38

(54) **AUTOMATED TECHNIQUES FOR MANUFACTURING FIBROUS PANELS**
AUTOMATISIERTE VERFAHREN ZUR HERSTELLUNG VON FASERPLATTEN
TECHNIQUES AUTOMATIQUES POUR FABRIQUER DES PANNEAUX FIBREUX

(30) Priority: 04.01.2011 GB 201100046; 05.01.2011 US 201161429790 P
(43) Date of publication of application: 13.11.2013
(73) Proprietor: Vestas Wind Systems A/S, 8200 Aarhus N (DK)
(72) Inventor: KINGSLEY, Simon, Surrey KT21 2HR (GB); HEDGES, Andrew, Hampshire SO15 5FR (GB)
(74) Representative: Vestas Patents Department
(86) International application number: PCT/GB2011/052515
(87) International publication number: WO 2012/093244

(56) References cited:
- EP-A2- 2 130 666
- WO-A2-2010/026411
- DE-A1-102006 035 847
- GB-A- 2 268 699
- US-A1- 2006 090 856

## Description

### Technical field

The present invention relates to automated techniques for the manufacture of fibrous panels.

### Background

Large composite articles, such as aeroplane fuselages or the blades of modern wind turbines are increasingly being manufactured by automated procedures such as 'automated fibre placement' (AFP). AFP involves laying fibres in the form of 'tows' on the surface of a mould tool that defines the shape of the composite part being manufactured. Tows are bundles of glass or carbon fibres that are wound on a spool. Typically, 'tow-preg' is used, which is where the fibres are pre-impregnated with a resin matrix. The tow-preg is laid as a series of adjacent strips on the surface of the mould tool by a fibre placement head that moves relative to the tool under computer control to form a laminate as it builds up layers of tows on the tool.

The tow-preg is fed through a roller on the fibre placement head to compact the tow-preg against the mould tool as it is laid. The placement head may include heating means for effecting in-situ curing of the matrix as the tow-preg is laid. On-the-fly curing is typically employed when the tow-preg comprises a thermoplastic resin, where heating the tow-preg as it is laid causes the tow-preg strip to weld to adjacent tow-preg strips on the mould. When the resin is a thermoset, a subsequent heat cure is generally required after lay-up to react the resin with a hardener. The heat cure generally takes place in an oven or autoclave.

'Automated tape laying' (ATL) is another example of an automated composite manufacturing procedure. ATL is similar to AFP except that the fibres are laid in the form of a tape, which is essentially a wide flat bundle of fibres. ATL is generally used to manufacture flat parts or parts having a gentle curvature, whereas AFP is used to manufacture parts having a more complex surface geometry.

Automated procedures such as those described above tend to be more precise and more efficient than traditional hand lay-up techniques. However, efficiency is ultimately limited by the time-consuming tasks of building the large moulds and then cleaning and maintaining these moulds between successive uses. The moulds are very expensive to create, and new moulds may be required to implement design changes in the articles being manufactured. Consequently, implementing design changes requires a significant financial outlay in terms of tooling costs, and carries a relatively long lead-time.

It is against this background that the present invention has been developed.

Prior published patent document DE102006035847A1 describes an automated method for producing aerospace components. According to DE102006035847A1, a tape-laying machine is provided for laying up lay-up material together with a pre-impregnated glassfibre sheet. The tape-laying machine positions the lay-up materials on a lamination arrangement, prior to a curing stage which generates the component. The lamination arrangement is provided with a surface contour corresponding to the external shape of the component. The tape laying machine includes a gantry, moveable in the X-direction. The tape-laying machine further includes a lay-up head moveable in the Y-direction, having a lay-up roller at its extremity which is translatable in the Z-direction and may be articulated in three degrees of freedom. Successive layers of the lay-up material are deposited on the surface contour of the laminating arrangement by the action of the lay-up roller.

### Summary of the invention

According to the present invention there is provided a method of making a structural fibrous panel having a predefined area, the method comprising: positioning a receiving surface at a first location within the predefined area, the receiving surface being smaller than the predefined area and being configured to define a local shape of the panel appropriate to the first location; placing fibrous material against the receiving surface; and imparting integrity to the fibrous material when against the receiving surface to create part of the panel at the first location before relative movement of the receiving surface away from the part of the panel thus created; and placing fibrous material against the receiving surface and imparting integrity to the fibrous material to create an adjoining part of the panel when the receiving surface is at a second location within the predefined area, adjacent to the first location.

According to the present invention there is provided an apparatus for making a structural fibrous panel having a predefined area, the apparatus comprising: a receiving surface; and a head for placing fibrous material against the receiving surface and imparting integrity to the fibrous material when against the receiving surface; wherein the receiving surface is smaller than the predefined area and is positionable at a plurality of locations within the predefined area to create successively adjacent and adjoining parts of the panel, the receiving surface being configurable to define a local shape of the panel appropriate to each of said plurality of locations.

The receiving surface may be significantly smaller than the predefined area. For example, in the specific embodiments of the invention described herein, the receiving surface is defined by a 300 x 300 mm platen that is moveable in unison with an automated fibre placement head. In those embodiments, the receiving surface is moveable in six degrees of freedom and functions as a mobile mini mould surface for placement and cure of fibrous material directly below the placement head. A programmed computer is used to control the movement of the receiving surface in accordance with instructions derived from a model defining the geometry of the panel.

It will be appreciated that the present invention eliminates conventional moulds and the associated disadvantages of such moulds that are described above. Accordingly, the present invention may provide a cheaper solution than conventional moulding techniques with shorter lead times for implementing design changes or for switching between designs. This is because there is no requirement to create, clean or otherwise maintain large moulds. Maintaining or replacing a relatively small receiving surface is cheaper and quicker than maintaining and cleaning large moulds. In addition, implementing design changes may only require re-programming, rather than creating new moulds, which reduces lead times.

Configuring the receiving surface to define the local shape of the panel may involve turning the receiving surface about at least one of a pitch, roll or yaw axis. In this way, the receiving surface may be inclined tangentially to the predefined area to mimic the local geometry of a traditional mould surface. Such movement may be achieved by mounting the receiving surface on a robotic arm and/or by virtue of a Stewart Platform arrangement. Alternatively or additionally, configuring the receiving surface may comprise changing the curvature of the receiving surface.

Relative movement of the receiving surface away from the part of the panel may comprise moving the receiving surface within the predefined area. For example, the receiving surface may be moved in at least one of an x, y or z direction, which are mutually orthogonal. In such examples, the position of the predefined area is substantially fixed, and thus the panel is created in a fixed location. However, embodiments of the invention are also envisaged in which the receiving surface is located in a fixed position, and the panel is moved relative to the receiving surface during its creation. Of course this arrangement could require significantly more space, particular when creating very large panels. For this reason, it is preferred that the receiving surface is moved within the predefined area.

It will be appreciated that relative movement of the receiving surface may be continuous or stepwise. Hence, fibrous material may be placed continuously against the receiving surface during relative movement of the receiving surface between the first and second locations. Alternatively, placement of the fibrous material against the receiving surface may be suspended during the relative movement, i.e. stepwise movement. It will also be appreciated that the first and second adjacent locations may overlap to an extent

The receiving surface may be moved in unison with the head, which may be arranged opposite the receiving surface and configured to place the fibrous material against the receiving surface. Fibrous material may be placed directly or indirectly against the receiving surface. For example, when creating the first layer of the panel, the fibrous material may be placed directly against the receiving surface, and when creating subsequent layers of the panel, the fibrous material may be placed on top of previous layers, i.e. indirectly against the panel. Other examples of indirect placement are also envisaged in which the fibrous material is laid upon a carrier material, such as a flexible sheet that is supported in the predefined area. In such examples, the receiving surface and the placement head would be located on opposite sides of the carrier material.

Suitable heads include fibre placement heads or tape-laying heads of the type used in automated fibre placement or automated tape laying techniques. The head may be moveable in at least one of the x, y or z directions. The head may be moveable about at least one of a pitch, roll or yaw axis. The head may be moveable on a robotic arm, or on a gantry. These types of heads are typically moveable in at least six degrees of freedom. The receiving surface may be coupled to the head, for example by way of a structure that loops around the predefined area.

As the receiving surface moves within the predefined area, it creates the panel in its wake. To support the panel when the receiving surface moves away, the apparatus may include at least one support. The method may comprise positioning one or more supporting structures in supporting contact with the part of the panel as the receiving surface moves away. Preferably, the apparatus includes an array of supports, such as pins, moveable independently between raised and lowered positions to support the panel as it is created and to allow for the passage of the receiving surface.

The method may comprise placing resin-impregnated fibrous material against the receiving surface. Alternatively, dry fibres may be placed against the receiving surface. The method may comprise infusing the dry fibres with a matrix material, for example a resin. The fibrous material may be placed against the receiving surface in the form of strips or bundles of fibres such as tows. The fibres may be any fibres suitable for use in composite construction, for example glass or carbon fibres.

Imparting integrity to the fibrous material may involve transforming the fibrous material into a form that is self-supporting to an extent. This may, for example, involve compacting the fibrous material against the receiving surface and/or heating the fibrous material. For example, the method may include heating the fibrous material as it is placed against the receiving surface. Heating the fibrous material causes the resin to flow and 'weld' the fibrous material to adjacent sections of fibrous material.

The panel may be a laminate comprising several laminate layers. In this case, the method may involve creating each layer sequentially, one on top of the other. When creating subsequent laminate layers, the receiving surface may be required to move against the first laminate layer. To facilitate such movement, the receiving surface may include at least one rolling contact support. The method may therefore involve rolling the receiving surface against previously created laminate layers of the panel. In one embodiment of the invention, the rolling contact support is provided by a belt, as part of a 'roller mould' arrangement. In another embodiment, the rolling contact is provided by an array of ball bearings arranged to revolve in respective recesses defined in the receiving surface.

The present invention may be used to create flat panels or curved panels. When creating flat panels the receiving surface is preferably flat, and when creating curved panels, the receiving surface may be flat or curved.

The apparatus may be used to create composite structures such as parts of a wind turbine, for example the shells of a wind turbine blade. However, it will be appreciated that the invention has more widespread application, and may be employed in the manufacture of any composite articles.

The invention may also be employed to manufacture preforms, such as single or multi-layer fibre plies for use in the construction of composite structures such as wind turbine blades. Such preforms may be fully or partly impregnated with semi-cured resin. Once created, the preforms may be placed in a mould and fully cured.

### Brief description of the drawings

In order that the invention may be more readily understood, reference will now be made, by way of example, to the accompanying drawings in which:
Figure 1 is a perspective view of a single-robot fibre placement apparatus in use creating a fibrous panel in accordance with a first embodiment of the present invention;
Figures 2a-2f are a series of schematic plan views of the fibre placement apparatus of Figure 1, which illustrate how fibrous tows are placed to create the panel;
Figures 3a-3c are a series of schematic end views of the apparatus of Figure 1, which illustrate how the robot moves to define the geometry of the panel;
Figure 4 is a perspective view of a dual-robot fibre placement apparatus in accordance with a second embodiment of the present invention;
Figure 5 is an end view of the dual-robot apparatus of Figure 4;
Figure 6 is a perspective view of a Stewart platform, which is used in the fibre placement apparatus of Figures 4 and 5;
Figure 7 is a perspective view of a dual-robot fibre placement apparatus in accordance with a third embodiment of the present invention;
Figure 8 is a schematic cross section through a fibre placement head, which is used in the fibre placement apparatuses of Figures 1 to 7;
Figure 8a is an enlarged view of part of Figure 8, illustrating how a fibrous tow is compacted by the fibre placement head;
Figure 9 shows the fibre placement head of Figure 8 arranged opposite a reaction roller arrangement, which may be optionally used in the first, second and/or third embodiments to facilitate movement of a platen against the surface of a partially formed panel; and
Figures 10a and 10b show an alternative to the roller arrangement of Figure 9, in which the platen supports an array of ball bearings.

### Detailed description

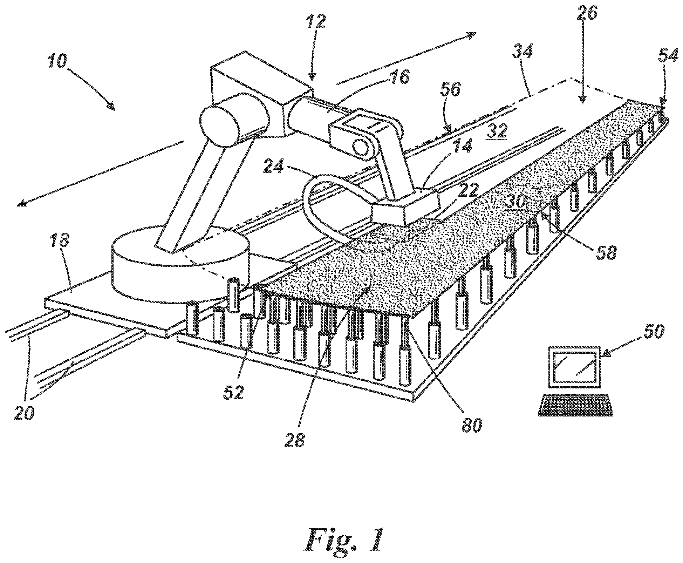

Figure 1 shows an automated fibre placement apparatus 10 in accordance with a first embodiment of the present invention. The apparatus 10 includes a fibre placement robot 12 comprising a fibre placement head 14 mounted at an end of an articulated robotic arm 16. The robotic arm 16 is in turn mounted on a base 18, which is arranged to slide on a pair of parallel tracks 20.

The fibre placement head 14 is moveable with six degrees of freedom, i.e. the three linear movements x, y, z (lateral, longitudinal and vertical), and the three rotations pitch, roll, and yaw, as facilitated by the robotic arm 16. Robotic movement of a fibre placement head 14 in six degrees of freedom is well known in the art and so is not described further herein.

A 'mini mould', in the form of a platen 22, is arranged opposite the fibre placement head 14. The platen 22 defines a receiving surface against which fibrous material is placed. In the configuration shown in Figure 1, the platen 22 is directly beneath the fibre placement head 14. The platen 22 is supported at one end of a C-shaped arm 24. The other end of the C-shaped arm is mounted to the fibre placement head 14. In this way, the platen 22 moves in registration with the fibre placement head 14 in six degrees of freedom.

As explained in further detail later, fibrous material is supplied between the fibre placement head 14 and the platen 22, and these two parts move in unison across a predefined area 26 to create a fibrous panel 28 as they move. In Figure 1, the predefined area 26 is represented in part by the speckled area 30, and in part by the area 32 within the dashed line 34. The speckled area 30 indicates where fibrous material has already been placed to create part of the panel 28, whilst the area 32 within the dashed line 34 indicates where fibrous material is yet to be placed to complete the panel 28. In this example, the platen 22 and the fibre placement head 14 are moveable in six degrees of freedom to define the local geometry of the panel 28 as they traverse the predefined area 26. The C-shaped arm 24 loops around the predefined area 26 and provides sufficient clearance to create the panel 28.

In this example, the platen 22 is rectangular and has dimensions of 300x300 millimetres. It will of course be appreciated that in other examples of the invention, the platen 22 may be larger or smaller and have any other suitable shape as required. Notably, the platen 22 is significantly smaller than the predefined area 26. In this example, the predefined area has a length of approximately fifty metres, and a width of approximately five metres.

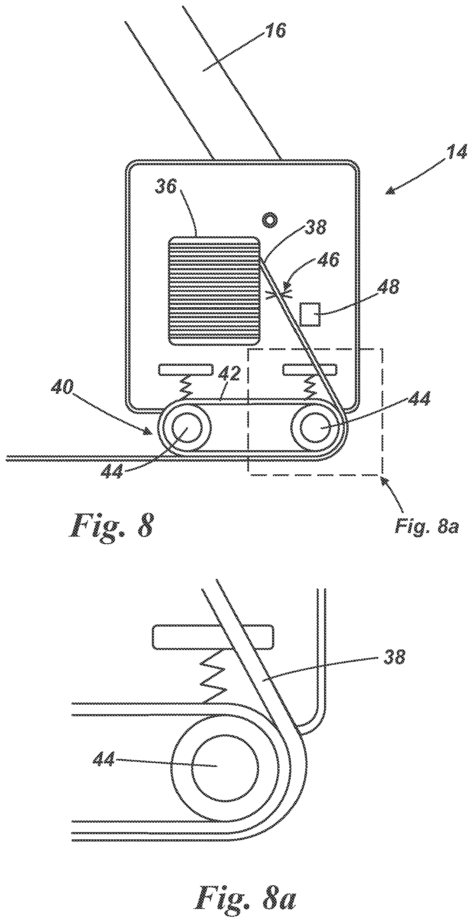

Referring briefly to Figure 8, the fibre placement head 14 in this example houses a spool 36 around which a continuous length of tow-preg 38 is wound. In this example, the tow-preg 38 includes a thermoplastic resin matrix. The fibre placement head 14 includes a compaction roller device 40 in which a belt 42 is arranged over a pair of driven compaction rollers 44, in a configuration similar to a tank track. In use, the tow-preg 38 is guided over the belt 42, before being placed on and compacted against the platen 22 by the compaction rollers 44.

The fibre placement head 14 also includes means for cutting 46 the tow-preg 38, and may further include means 48 for cooling and/or heating the tow-preg 38, which is a common feature of fibre placement heads 14 known in the art. Cooling the tow-preg 38 causes the resin to harden slightly, which makes the tow-preg 38 easier to handle, whilst heating the tow-preg 38 softens the resin so that it becomes sticky. Generally, the tow-preg 38 is cooled inside the fibre placement head 14 to facilitate transfer of the tow-preg 38 to the platen 22, and then the tow-preg 38 is heated immediately prior to being placed on the platen 22 so that it sticks in place effectively.

Referring again to Figure 1, the fibre placement robot 12 is controlled by means of a programmed computer 50, and in this example is programmed to create a curved panel 28 as represented in part by the speckled area 30, and in part by the area 32 within the dashed line 34. The panel 28 is elongate, and extends longitudinally between first and second transverse edges 52, 54.

The curved panel 28 in this example is a laminate comprising a plurality of laminate layers, and may be part of a wind turbine blade shell. The precise geometry of the curved panel 28 is modelled in three dimensions using computer aided design (CAD) software in accordance with techniques that will be readily apparent to those skilled in the art.

In this example, the curvature of the panel 28 varies across the width of the panel 28, such that the panel 28 has an effective radius of curvature that decreases when moving towards a first longitudinal edge 56, for example the leading edge of an aerofoil, and an effective radius of curvature that increases when moving towards a second longitudinal edge 58, for example the trailing edge of an aerofoil. As shown, there is a pronounced curvature in the region of the first longitudinal edge 56, whilst the panel 28 is substantially flat in the region of the second longitudinal edge 58.

To create the panel 28, the fibre placement head 14 is traversed across the predefined area 26 defining the shape of the curved panel 28. As the fibre placement head 14 traverses the predefined area 26, it is moved about its six degrees of freedom to position the platen 22 in accordance with the 3D CAD model to define the local geometry of the panel 28. Tow-preg strips 38 are then placed on the platen 22, compacted against the platen 22, and heated by the fibre placement head 14 to weld the strips to adjacent strips to form part of the laminate.

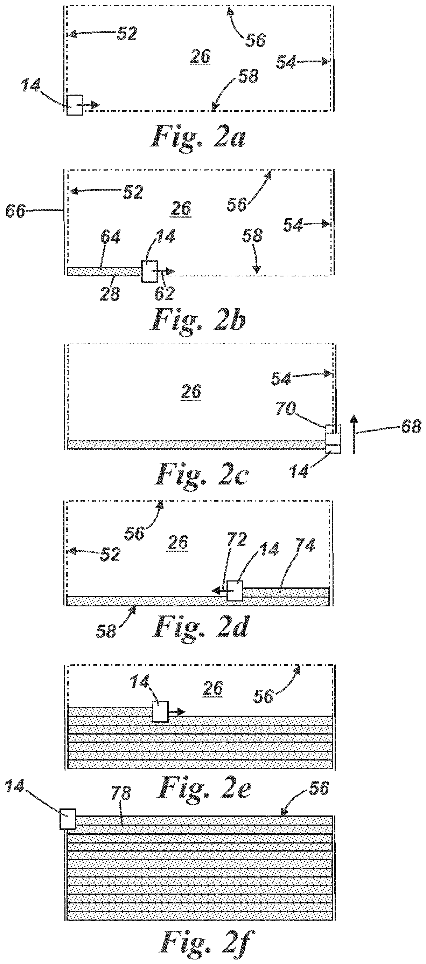

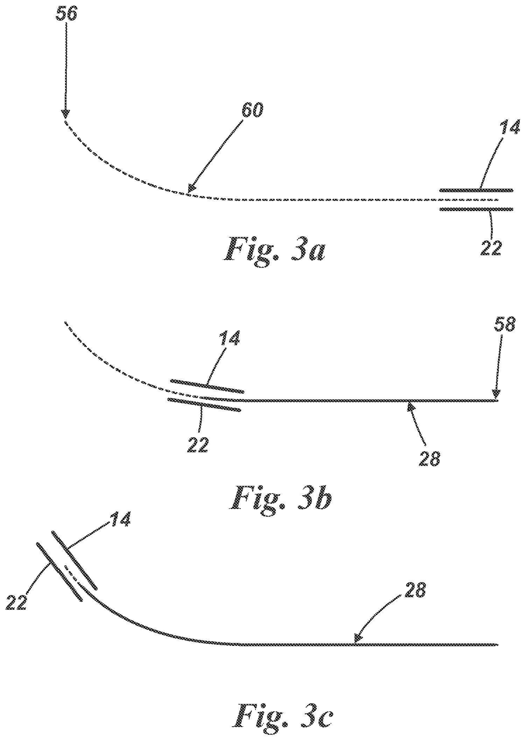

In this example, each laminate layer is formed by a series of strips of tow-preg 38 that are placed adjacent one another by the fibre placement head 14, as will now be described with reference to the series of schematic plan views of Figures 2a-2f, and the series of schematic end-views of Figures 3a-3c in addition to Figure 1.

Referring firstly to Figure 2a, to create the first laminate layer, the fibre placement head 14 and the opposed platen 22 are initially positioned at a corner of the predefined area 26, in this case the corner defined by the first transverse edge 52 and the second longitudinal edge 58, i.e. the lower left corner as shown.

Next, and referring to Figure 3a, the fibre placement head 14 is moved in one or more of its six degrees of freedom to position the opposed platen 22 appropriately to define the local geometry of the panel 28. The dotted line 60 in Figure 3a represents the first transverse edge 52 of the predefined area 26 shown in Figure 3a, and shows the curvature that the panel 28 will have when created. In this case, since the panel 28 is substantially flat near its second longitudinal edge 58, the fibre placement head 14 and the platen 22 are arranged substantially parallel to the floor.

Referring now to Figure 2b, with the fibre placement head 14 and the platen 22 aligned in this way, the fibre placement robot 12 slides on its tracks 20 to move the fibre placement head 14 and the platen 22 parallel to the longitudinal edges 56, 58 of the predefined area 26 towards the second transverse edge 54. Movement of the fibre placement head 14 is represented by the arrow 62. As the fibre placement head 14 moves, it places a strip 64 of tow-preg 38 (Figure 8) on the opposed platen 22, and the compaction roller (Figure 8) compacts the strip 64 against the platen 22 to impart shape and integrity to the partially-created panel 28. A first clamp 66 at the first transverse edge 52 of the predefined area 26 holds the strip 64 of tow-preg 38 in position as the platen 22 moves. In reality, the strip 64 would be significantly narrower than represented in Figures 2b. Typically, the strip 64 would have a width of a few centimetres, whilst the width of the predefined area 26 would be several metres in the case that the panel 28 is part of a wind turbine blade.

Referring to Figure 2c, when the fibre placement head 14 reaches the second transverse edge 54 of the predefined area 26, it cuts the strip 64 of tow-preg 38. The robotic arm 16 then moves the fibre placement head 14 and the opposed platen 22 transversely, in the direction of the arrow 68, into position (as represented by the dotted line 70) to place a second strip of tow-preg 38 (Figure 8) adjacent the first strip 64.

Referring to Figure 2d, the fibre placement robot 12 slides back along its tracks 20 causing the fibre placement head 14 to move parallel to the longitudinal edges 56, 58 of the predefined area 26, back towards the first transverse edge 52 as represented by the arrow 72. As the fibre placement head 14 moves in this way, it places the second strip 74 of tow-preg 38 adjacent the first strip 64. A second clamp 76 at the second transverse edge 54 of the predefined area 26 holds the second strip 74 of tow-preg 38 (Figure 8) in position as the platen 22 moves.

The process of laying strips of tow-preg 38 (Figure 8) repeats across the width of the predefined area 26, with the platen 22 being oriented appropriately to define the local curvature of the panel 28 as the robot 12 progresses. As the fibre placement head 14 begins laying strips of tow-preg 38 near the first longitudinal edge 56 of the predefined area 26, as shown in Figure 2e, the fibre placement head 14 and platen 22 are inclined slightly relative to the floor, as shown in Figure 3b, to define the curvature of the panel 28 in this region. In Figure 3b, the partially-created panel 28 is represented by the solid black line.

The degree of inclination of the fibre placement head 14 and platen 22 increases as the fibre placement head 14 moves closer to the first longitudinal edge 56. Referring to Figure 2f, when the final strip 78 of tow-preg 38 (Figure 8) is placed to define the first longitudinal edge 56 of the panel 28, the fibre placement head 14 and the platen 22 are significantly inclined relative to the floor, as shown in Figure 3c.

Referring again to Figure 1, as the fibre placement head 14 traverses the predefined area 26, a partially-created panel 28, as represented by the speckled area 30, is left in its wake. The panel 28 is created above an array of pins 80, which are raised or lowered under the control of the computer 50. One or more pins 80 in a region beneath the platen 22 are raised up to support the partially-created panel 28 when the platen 22 moves away with the fibre placement head 14. In this example, the pins 80 are pneumatic, but it in other examples the pins 80 may be raised and lowered by other suitable means, for example mechanically or magnetically.

Once the first layer has been created, a second laminate layer is created on top of the first layer. To create the second layer, the platen 22 moves beneath and against the first layer, with subsequent tow-preg strips being placed on top of the first layer. Subsequent layers are created in a similar way, with the platen 22 moving beneath and against the first layer, with each subsequent layer being placed on top of the previously-created layer. The driven compaction rollers 44 of the fibre placement head 14 serve to feed the tow-preg 38 when creating the first laminate layer. The rollers 44 are not necessarily driven when creating subsequent laminate layers because the rollers 44 will turn against the previously-created laminate layers.

As the fibre placement head 14 and the platen 22 progress, the pins 80 are lowered to make way for the platen 22 before being raised again to support the panel 28 when the platen 22 moves away.

It will be appreciated that the sequence of movements of the fibre placement head 14 and the platen 22 may be varied between layers to vary the orientation of the reinforcing fibres in the various layers and/or to create panels having complex geometries. The orientation of the platen 22 may also be varied as it moves along the length of the predefined area 26.

The laminate layers are consolidated by the compaction roller 44 (Figure 8) acting against the opposed platen 22. The effect of compaction on the tow preg 38 can be seen in Figure 8a, which is an enlarged view of part of Figure 8. Referring to Figure 8a, the tow-preg 38 is relatively thick before it is compacted by the compaction roller 44, and relatively thin after it has been compacted.

The fibre placement head 14 heats the tow-preg 38 as it is laid. Heating the tow-preg 38 softens the thermoplastic resin sufficiently to weld the strips of tow-preg 38 to previously-placed tow-preg 38. The thermoplastic resin hardens immediately after the fibre placement head 14 moves away, such that as the fibre placement head 14 moves, solid composite material is left in its wake.

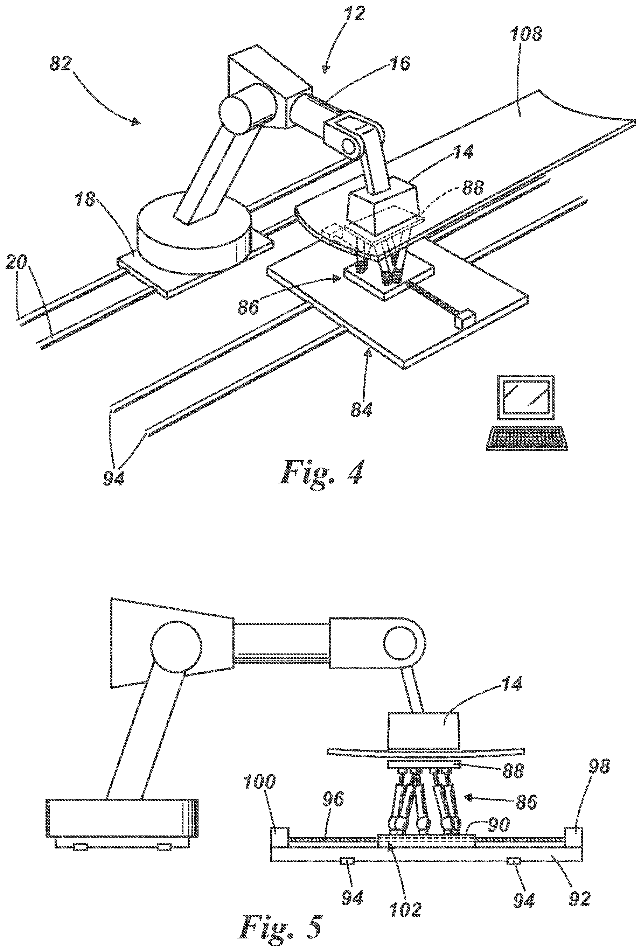

Reference will now be made to Figures 4 and 5, which show a dual-robot automated fibre placement apparatus 82 in accordance with a second embodiment of the present invention. The first robot 12 is an automated fibre placement robot similar to the robot of the first embodiment, in which a fibre placement head 14 is mounted at an end of a robotic arm 16. As with the first embodiment, the robotic arm 16 is mounted on a base 18, which is arranged to slide on a first pair of parallel tracks 20, and the fibre placement head 14 is moveable with six degrees of freedom.

The second robot 84 includes a Stewart platform 86 comprising a platen 88 in opposed relation to the fibre placement head 14. In this example, the platen 88 is rectangular, has dimensions of 300x300 millimetres, and is located directly beneath the fibre placement head 14. The Stewart platform 86 includes a carriage 90, which is mounted on a base 92 below the platen 88. The base 92 is arranged to slide on a second pair of parallel tracks 94, which are spaced apart from, and parallel to, the first pair of tracks 20.

The carriage 90 is arranged to move on the base 92 in a direction transverse to the second pair of parallel tracks 94. To this end, the carriage 90 is mounted on a threaded rod 96 that extends transversely across the base 92. One end of the rod 96 is connected to an electric stepper motor 98 mounted on the base 92, whilst the other end of the rod 96 is supported by a bearing 100. The threaded rod 96 extends through and engages with a threaded bore 102 defined in the carriage 90. The stepper motor 98 is arranged to turn the rod 96, which due to the engagement between the respective threads of the rod 96 and the bore 102 causes the carriage 90 to move transversely on the base 92.

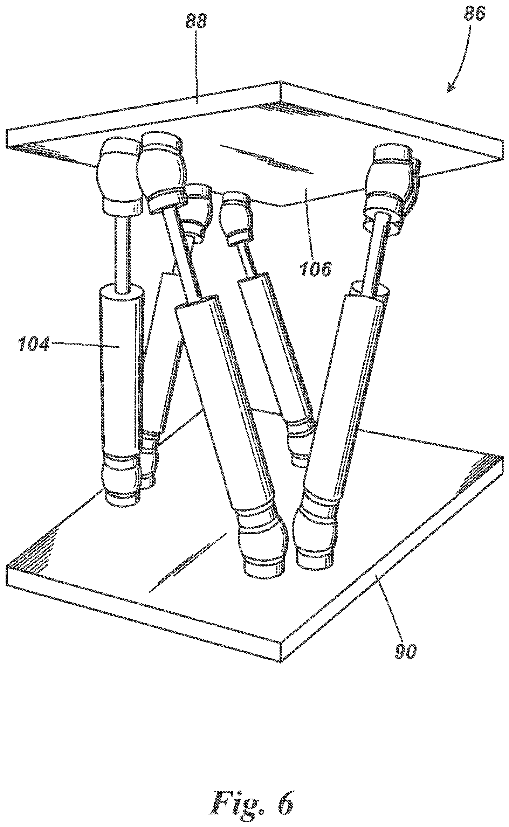

Referring now to Figure 6, the Stewart platform 86 includes six hydraulic actuators 104 mounted between an underside 106 of the platen 88 and the carriage 90 below the platen 88. The actuators 104 are mounted in pairs to the carriage 90, and in pairs to the platen 88. The pairings change between the carriage 90 and the platen 88, with each actuator 104 of a respective pair at the carriage end being paired with an adjacent actuator 104 of a neighbouring pair at the platen end. Under computer control, the hydraulic actuators 104 can be moved synergistically in various combinations to effect movement of the platen 88 in six degrees of freedom, i.e. the three linear movements x, y, z (lateral, longitudinal and vertical), and the three rotations pitch, roll, and yaw. Stewart platforms are also known as "six-axis" platforms or "synergistic" platforms.

Referring again to Figures 4 and 5, the dual-robots 12, 84 are computer controlled, and in this example are programmed to create a curved panel 108 as shown. The curved panel 108 is significantly larger than the platen 88. The curved panel 108 may be one half of a wind turbine blade shell. The precise geometry of the curved panel 108 is modelled in three dimensions using computer aided design (CAD) software in accordance with techniques that will be readily apparent to those skilled in the art.

To create the panel 108, the two robots 21, 84 are programmed to move in unison across a predefined area defining the shape of the curved panel 108. In this embodiment, the second robot 84 is not connected to the fibre placement head 14, but its movement is synchronised with that of the fibre placement head 14. The second robot 84 provides a moveable mould surface (i.e. the platen 88) onto which tow-preg is initially placed by the fibre placement robot 12 . The hydraulic actuators 104 (Figure 6) of the Stewart platform 86 are computer controlled and operated synergistically in accordance with instructions derived from the 3D CAD model. The six degrees of freedom afforded by the Stewart platform 86 enables the platen 88 to move in registration with the fibre placement head 14 to define the local geometry of the panel 108 at the position where tow-preg is placed. The precise sequence of movements of the robots 12, 84 is calculated based upon coordinates derived from the CAD model defining the geometry of the panel 108.

Each layer of the panel 108 is built up from a series of adjacent strips of tow-preg in a similar process to that described above in relation to the first embodiment, i.e. the robots 12, 84 slide along their respective tracks 20, 94 as the fibre placement head 14 places tow-preg strips against the platen 88. After each strip of tow-preg has been placed, the robots 12, 84 are moved transversely to their tracks 20, 94 in position to lay the next strip.

Whilst not shown in Figures 4 and 5, an array of pins similar to that shown in Figure 1 may be employed to support the panel 108 as it is being formed, and when the platen 88 moves away. When forming the second and subsequent laminate layers, previously raised pins may be lowered to make way for the second robot 84. The lowered pins are raised again in the wake of the second robot 84 to support the panel 108.

It will be appreciated that the Stewart platform 86 described in relation to the second embodiment of the invention may also be used in connection with the first embodiment. To this end, the Stewart platform 86 may be supported by the platen 22 in the first embodiment. In this way, the Stewart platform 86 would move in tandem with the fibre placement head 14 across the predefined area 26, but could be moved in six degrees of freedom independently from the six degrees of freedom of the fibre placement head 14.

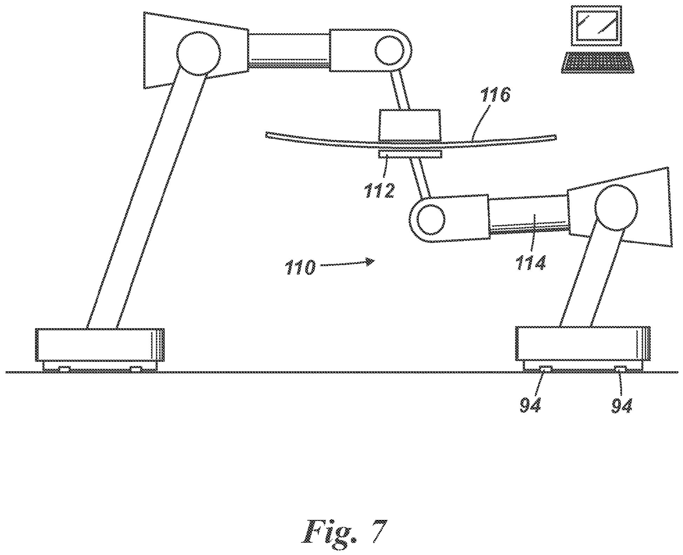

Referring to Figure 7, in a third embodiment of the invention, a second robot 110 comprises a platen 112 mounted to an articulated robot arm 114. The articulated robot arm 114 is able to move the platen 112 in six degrees of freedom. Aside from this difference, it will be appreciated that this apparatus may be operated in substantially the same way as described above in relation to the first and/or second embodiment of the present invention to create a fibrous panel 116. As with the first and second embodiments, the platen 112 is significantly smaller in size than the panel 116 that is created.

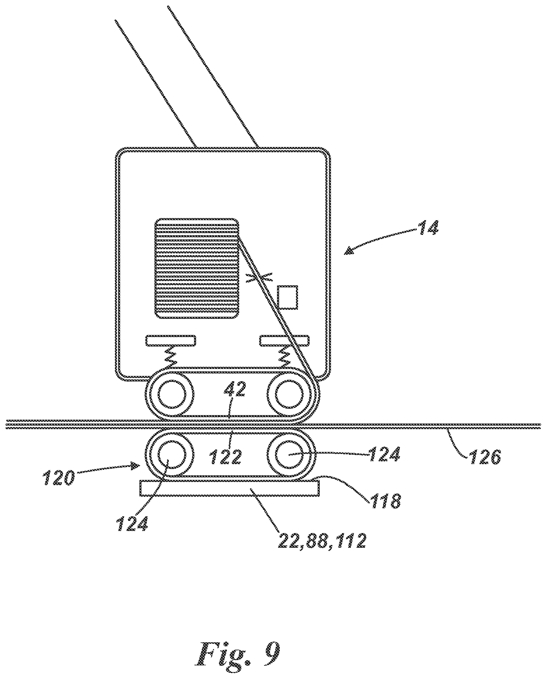

Referring to Figure 9, an upper surface 118 of the platen 22, 88, 112 in either of the first, second or third embodiments of the invention may support a 'roller mould' 120 . The roller mould 120 comprises a wide belt 122 stretched over a pair of elongate rollers 124, in a tank-track arrangement. The belt 122 of the roller mould 120 is arranged opposite and in contra-rotation to the compaction belt 42 of the fibre-placement head 14. The roller mould 120 facilitates movement of the platen 22, 88, 112 against previously created laminate layers, such as the lower laminate layer 126 shown in Figure 9. To this end, the rollers 124 are oriented with their longitudinal rotational axes substantially perpendicular to the direction of movement of the fibre placement head 14 and platen 22, 88, 112.

In these examples, to correspond with the dimensions of the platens 22, 88, 112, the rollers 124 are approximately 300 mm long and are located, respectively, adjacent the front and rear edges of the platen 22, 88, 112. As such, the rollers 124 are spaced apart by approximately 300 mm. The belt 122 in this example has an approximate width of 300 mm. It will of course be appreciated that the roller mould 120 may have any other suitable dimensions, and its dimensions need not necessarily correspond to the dimensions of the platen 22, 88, 112.

It will be appreciated that the roller mould 120 is one example of a means for facilitating movement of the platen against previously placed laminate layers 126. An alternative technique would be to lubricate or apply a suitable coating to the platen 22, 88, 112, for example a PTFE-based coating, which would allow the platen 22, 88, 112 to slide against the laminate.

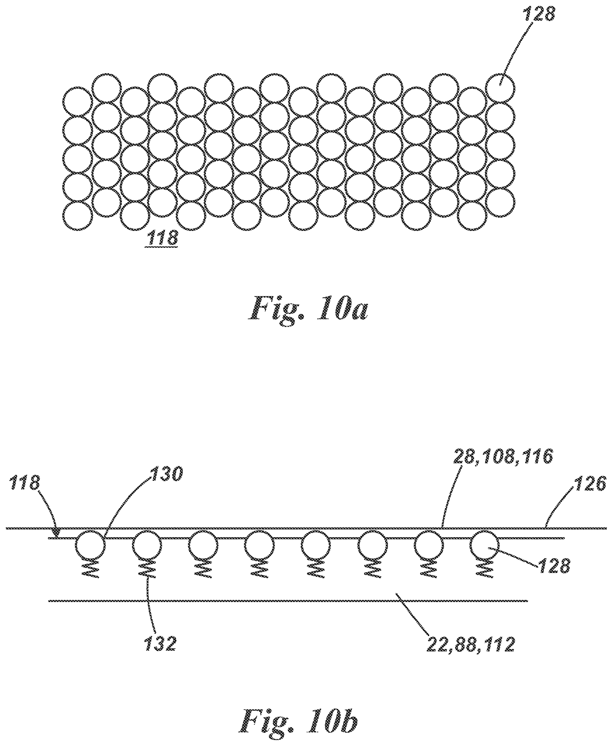

Another alternative, which is shown schematically in Figures 10a and 10b, is for the platen 22, 88, 112 to support one or more ball bearings 128 arranged to roll against previously placed layers 126. Figure 10a, which is a plan view of part of the upper surface 118 of the platen 22, 88, 112, shows that the ball bearings 128 are arranged in an array, with the ball bearings 128 in each row/column of the array being staggered with respect to the ball bearings 128 in an adjacent row/column. As shown in the schematic side view of Figure 10b, each ball bearing 128 is supported in a respective recess 130 in the upper surface 118, and is biased towards the panel 28, 108, 116 by a spring 132 located within the recess 130. As the platen 22, 88, 112 is moved relative to the panel 28, 108, 116, the ball bearings 128 turn in their respective recesses 130 to allow the platen 22, 88, 112 to move smoothly against the panel 28, 108, 116.

In alternative embodiments of the present invention, a means for facilitating movement of the platen 22 against the panel 28, 108, 116 may not be required. For example, when creating single-layer laminates, the platen 22, 88, 112 is not required to move against previous laminate layers 126. Nevertheless, means for facilitating such movement may advantageously be employed whenever the platen 22, 88, 112 is required to move against the panel 28, 108, 116.

The dimensions of the platen 22, 88, 112 are selected according to the dimensions of the product being manufactured and/or the type and dimensions of the tows or other fibrous material being placed. Other embodiments of the invention may employ larger or smaller platens 22, 88, 112. In particular, embodiments are envisaged in which the length and/or width of the platen 22, 88, 112 is up to several metres. It will be appreciated that relatively small platens 22, 88, 112 may advantageously be employed to create regions having a relatively small radius of curvature that could not be created with a large platen 22, 88, 112.

In the examples described above, the platen 22, 88, 112 provides a localised mobile mould surface directly below the fibre placement head 14, against which fibrous material is placed and heated. However, in alternative embodiments, the fibre placement head 14 may not be configured to heat the fibrous material as it is laid. Alternative embodiments are envisaged in which the placed tows are compacted and/or cooled or frozen to impart sufficient integrity to the panel 28, 108, 116 to allow the panel to be transferred to an autoclave or other suitable location to effect curing of the resin matrix. In other examples, the panel 28, 108, 116 may remain supported by the pins 80 whilst curing is effected by other means, for example by circulating hot air. Alternatively or additionally, a suitable hardener may be added to the resin and the panel 28, 108, 116 may remain supported by the pins 80 for a predetermined time period to allow the resin to cure.

In other examples of the present invention, the fibre placement head and/or the mobile mould surface may be mounted on gantries rather than on robot arms.

Whilst tow-preg is described in the above examples, the fibre placement head 14 could be configured to place other fibrous material, for example prepreg tape, prepreg slit tape or dry fibres. When working with dry fibres, the fibre placement head 14 may additionally include resin impregnating means for transferring resin to the fibres 'on-the-fly', i.e. as the fibres are laid, and compaction means for consolidating the resin-impregnated fibres to impart the requisite structural integrity to the fibres to create a panel 28, 108, 116. Alternatively, dry fibres could be laid down with a binder before undergoing resin infusion.

Whilst the fibrous material in the examples above includes a thermoplastic matrix, in other examples a thermosetting matrix may be employed. In such examples, a subsequent heat cure may be required, for example in an oven or autoclave.

Whilst the examples above describe the manufacture of panels of relatively simple geometry, it will be appreciated that these techniques may be employed to create panels of more complex geometry, such as the shells of modern wind turbine blades, or panels for use in the construction of such shells. When creating panels of more complex geometry, for example panels having a double surface curvature, successive tows may be placed in a pattern that is more complex than the parallel fixed width strips described above by way of example.

In other examples of the invention, multiple fibre placement robots and associated mini-moulds may be employed simultaneously to increase the rate of production of large panels.

The above techniques may also be employed to create 'preforms', i.e. fibre plies comprising dry fibres or fibres that are fully or partly impregnated with semi-cured resin. The plies may be used in the manufacture of composite structure such as wind turbine blades. To this end, the preforms are placed in a mould in accordance with known composite moulding techniques. Dry-fibre plies are infused with resin in the mould before being cured, whereas prepreg plies are heated in the mould to fully cure the semi-cured resin.

Whilst in the examples described above, the platen and fibre placement head traverse the predefined area, in other examples of the invention, the fibre placement head and the platen may remain in a fixed position. In such embodiments, the growing panel would be moved relative to the fibre placement head and the platen by a suitable work-piece handling means.

It will of course be appreciated that many other modifications may be made to the examples described above without departing from the scope of the invention as defined by the accompanying claims.

## Claims

1. A method of making a structural fibrous panel (28) having a predefined area (32), the method comprising:
positioning a movable platen (22, 88, 112) having a receiving surface at a first location within the predefined area (32), the platen (22, 88, 112) and its receiving surface being smaller than the predefined area (32) of said fibrous panel (28) and being
configured to define a local shape of the panel (28) appropriate to the first location;
placing fibrous material (38) against the receiving surface of said platen (22, 88, 112) and
imparting integrity to the fibrous material (38) when against the receiving surface of said platen (22, 88, 112) to create part of the panel (28) at the first location before relative movement of the platen (22, 88, 112) and its receiving surface away from the part of the panel (28) thus created; and
then placing fibrous material (38) against the receiving surface of said platen (22, 88, 112) and imparting integrity to the fibrous material (38) to create an adjoining part of the panel (28) when the platen (22, 88, 112) and its receiving surface is at a second location within the predefined area (32), adjacent to the first location.

2. The method of Claim 1, wherein configuring the receiving surface to define the local shape of the panel (28) comprises turning the platen (22, 88, 112) about at least one of a pitch, roll or yaw axis.

3. The method of Claim 1 or Claim 2, wherein relative movement of the platen (22, 88, 112) away from the part of the panel (28) comprises moving the platen (22, 88, 112) and its receiving surface within the predefined area (32), with the position of the predefined area (32) being substantially fixed in space.

4. The method of Claim 3, wherein moving the platen (22, 88, 112) and its receiving surface within the predefined area (32) comprises moving the platen (22, 88, 112) in at least one of an x, y or z direction.

5. The method of Claim 3 or Claim 4, further comprising moving the platen (22, 88, 112) within the predefined area (32) in unison with an opposed head (14) arranged to place the fibrous material (38) against the receiving surface of said platen (22, 88, 112).

6. The method of any preceding claim, further comprising placing fibrous material (38) against the receiving surface during movement of the platen (22, 88, 112) within the predefined area (32).

7. The method of any preceding claim, further comprising supporting the part of the panel (28) created at the first location as the receiving surface of said platen (22, 88, 112) moves away from that part of the panel (28).

8. The method of any preceding claim, further comprising creating the panel (28) adjacent an array of moveable supports (80) and raising selected supports (80) to support the part of the panel (28).

9. The method of any preceding claim, further comprising rolling the platen (22, 88, 112) and its receiving surface against previously created laminate layers of the panel (28).

10. Apparatus for making a structural fibrous panel (28) having a predefined area (32), the apparatus comprising:
a movable platen (22, 88, 112) having a receiving surface; and
a head (14) for placing fibrous material (38) against the receiving surface of said platen (22, 88, 112) and imparting integrity to the fibrous material (38) when against said receiving surface;
wherein the platen (22, 88, 112) and its receiving surface is smaller than the predefined area (32) of said fibrous panel and is
positionable at a plurality of locations within the predefined area (32) to create
successively adjacent and adjoining parts of the panel (28), the platen (22, 88, 112) and its receiving surface being configurable to define a local shape of the panel (28) appropriate to each of said plurality of locations.

11. The apparatus of Claim 10, wherein the platen (22, 88, 112) is coupled to the head (14).

12. The apparatus of Claim 10 or Claim 11, wherein the platen receiving surface is a surface of a Stewart platform (86).

13. The apparatus of any of Claims 10 to 12, wherein the platen (22, 88, 112) is mounted on a robotic arm (16).

14. The apparatus of any of Claims 10 to 13, further comprising an array of supports (80) for supporting the part of the panel (28) created as the receiving surface of said platen (22, 88, 112) moves away, the supports (80) being moveable independently between raised and lowered positions to support the panel (28) as it is created and to allow for the passage of the platen (22, 88, 112) and its receiving surface.

15. The method of any of Claims 1 to 11 or the apparatus of any of Claims 10 to 14, wherein the panel (28) is a laminate and/or is curved and/or is at least part of a wind turbine blade and/or is a preform.

## Patentansprüche

1. Verfahren zum Herstellen einer strukturellen Faserplatte (28) mit einem vordefinierten Bereich (32), das Verfahren umfassend:
Positionieren einer bewegbaren Aufspannplatte (22, 88, 112), die an einer ersten Stelle innerhalb des vordefinierten Bereichs (32) eine Empfangsoberfläche aufweist,
wobei die Aufspannplatte (22, 88, 112) und ihre Empfangsoberfläche kleiner sind, als der vordefinierte Bereich (32) der Faserplatte (28), und konfiguriert sind, um eine lokale Form der Platte (28), die für die erste Stelle geeignet ist, zu definieren;
Platzieren von Fasermaterial (38) gegen die Empfangsoberfläche der Aufspannplatte (22, 88, 112) und
Verleihen von Integrität zu dem Fasermaterial (38), wenn es gegen die Empfangsoberfläche der Aufspannplatte (22, 88, 112) platziert ist, um einen Teil der Platte (28) an der ersten Stelle zu schaffen, vor einer relativen Bewegung der Aufspannplatte (22, 88, 112) und ihrer Empfangsoberfläche weg von dem somit geschaffenen Teil der Platte (28); und
anschließendes Platzieren von Fasermaterial (38) gegen die Empfangsoberfläche der Aufspannplatte (22, 88, 112) und Verleihen von Integrität zu dem Fasermaterial (38), um einen benachbarten Teil der Platte (28) zu schaffen, wenn sich die Aufspannplatte (22, 88, 112) und ihre Empfangsoberfläche an einer zweiten Stelle innerhalb des vordefinierten Bereichs (32), benachbart zu der ersten Stelle, befinden.

2. Verfahren nach Anspruch 1, wobei Konfigurieren der Empfangsoberfläche, um eine lokale Form der Platte (28) zu definieren, Drehen der Aufspannplatte (22, 88, 112) um zumindest eine von der Winkeleinstellungs-, Roll- oder Nachführungs-Achse umfasst.

3. Verfahren nach Anspruch 1 oder Anspruch 2, wobei relative Bewegung der Aufspannplatte (22, 88, 112) weg von dem Teil der Platte (28) Bewegen der Aufspannplatte (22, 88, 112) und ihrer Empfangsoberfläche innerhalb des vordefinierten Bereichs (32) umfasst, wobei die Position des vordefinierten Bereichs (32) im Wesentlichen im Raum fixiert ist.

4. Verfahren nach Anspruch 3, wobei Bewegen der Aufspannplatte (22, 88, 112) und ihrer Empfangsoberfläche innerhalb des vordefinierten Bereichs (32) Bewegen der Aufspannplatte (22, 88, 112) in zumindest eine von der x-, y- oder z-Richtung umfasst.

5. Verfahren nach Anspruch 3 oder Anspruch 4, weiter umfassend Bewegen der Aufspannplatte (22, 88, 112) innerhalb des vordefinierten Bereichs (32) in Übereinstimmung mit einem gegenüberliegenden Kopf (14), der angeordnet ist, um das Fasermaterial (38) gegen die Empfangsoberfläche der Aufspannplatte (22, 88, 112) zu platzieren.

6. Verfahren nach einem der vorstehenden Ansprüche, weiter umfassend Platzieren des Fasermaterials (38) gegen die Empfangsoberfläche während der Bewegung der Aufspannplatte (22, 88, 112) innerhalb des vordefinierten Bereichs (32).

7. Verfahren nach einem der vorstehenden Ansprüche, weiter umfassend Stützen des Teils der Platte (28), das an der ersten Stelle geschaffen wurde, wenn die Empfangsoberfläche der Aufspannplatte (22, 88, 112) sich von diesem Teil der Platte (28) wegbewegt.

8. Verfahren nach einem der vorstehenden Ansprüche, weiter umfassend Schaffen der Platte (28) benachbart zu einer Anordnung von bewegbaren Träger (80) und Anheben ausgewählter Träger (80), um das Teil der Platte (28) zu stützen.

9. Verfahren nach einem der vorstehenden Ansprüche, weiter umfassend Rollen der Aufspannplatte (22, 88, 112) und ihrer Empfangsoberfläche gegen zuvor geschaffene Laminatschichten der Platte (28).

10. Vorrichtung zum Herstellen einer strukturellen Faserplatte (28) mit einem vordefinierten Bereich (32), die Vorrichtung umfassend:
eine Aufspannplatte (22, 88, 112), die eine Empfangsoberfläche aufweist; und
einen Kopf (14) zum Platzieren von Fasermaterial (38) gegen die Empfangsoberfläche der Aufspannplatte (22, 88, 112) und
zum Verleihen von Integrität zu dem Fasermaterial (38), wenn es gegen die Empfangsoberfläche platziert ist;
wobei die Aufspannplatte (22, 88, 112) und ihre Empfangsoberfläche kleiner sind, als der vordefinierte Bereich (32) der Faserplatte, und an einer Mehrzahl von Stellen innerhalb des vordefinierten Bereichs (32) positionierbar sind, um nacheinander benachbarte und angrenzende Teile der Platte (28) zu schaffen, wobei die Aufspannplatte (22, 88, 112) und ihre Empfangsoberfläche konfigurierbar sind, um eine lokale Form der Platte (28) zu schaffen, die für jede der Mehrzahl von Stellen geeignet ist.

11. Vorrichtung nach Anspruch 10, wobei die Aufspannplatte (22, 88, 112) mit dem Kopf (14) gekoppelt ist.

12. Vorrichtung nach Anspruch 10 oder Anspruch 11, wobei die Empfangsoberfläche der Aufspannplatte die Oberfläche einer Stewart-Plattform (86) ist.

13. Vorrichtung nach einem der Ansprüche 10 bis 12, wobei die Aufspannplatte (22, 88, 112) an einem Roboterarm (16) befestigt ist.

14. Vorrichtung nach einem der Ansprüche 10 bis 13, weiter umfassend eine Anordnung von Trägern (80) zum Stützen des geschaffenen Teils der Platte (28), wenn sich die Empfangsoberfläche der Aufspannplatte (22, 88, 112) wegbewegt, wobei die Träger (80) unabhängig voneinander zwischen erhöhten und abgesenkten Positionen bewegbar sind, um die Platte (28) zu stützen, während sie geschaffen wird, und um den Durchgang der Aufspannplatte (22, 88, 112) und seiner Empfangsoberfläche zu ermöglichen.

15. Verfahren nach einem der Ansprüche 1 bis 11 oder Vorrichtung nach einem der Ansprüche 10 bis 14, wobei die Platte (28) ein Laminat ist und/oder gekrümmt ist und/oder zumindest ein Teil eines Windturbinenblatts ist und/oder eine Vorform ist.

## Revendications

1. Procédé pour fabriquer un panneau fibreux structurel (28) présentant une zone prédéfinie (32), le procédé comprenant :
le positionnement d'un plateau mobile (22, 88, 112) présentant une surface de réception à un premier emplacement dans la zone prédéfinie (32),
le plateau (22, 88, 112) et sa surface de réception étant plus petits que la zone prédéfinie (32) dudit panneau fibreux (28) et étant configurés pour définir une forme locale du panneau (28) appropriée au premier emplacement ;
le placement de matériau fibreux (38) contre la surface de réception dudit plateau (22, 88, 112) et
la communication de l'intégrité au matériau fibreux (38) lorsqu'il est contre la surface de réception dudit plateau (22, 88, 112) pour créer une partie du panneau (28) au premier emplacement avant le déplacement relatif du plateau (22, 88, 112) et sa surface de réception à l'écart de la partie du panneau (28) ainsi créée ; et
ensuite le placement du matériau fibreux (38) contre la surface de réception dudit plateau (22, 88, 112) et la communication de l'intégrité au matériau fibreux (38) pour créer une partie attenante du panneau (28) lorsque le plateau (22, 88, 112) et sa surface de réception sont à un second emplacement dans la zone prédéfinie (32), adjacent au premier emplacement.

2. Procédé selon la revendication 1, dans lequel la configuration de la surface de réception pour définir la forme locale du panneau (28) comprend la rotation du plateau (22, 88, 112) autour d'au moins un d'un axe de calage, de roulis ou d'orientation.

3. Procédé selon la revendication 1 ou la revendication 2, dans lequel le déplacement relatif du plateau (22, 88, 112) à l'écart de la partie du panneau (28) comprend le déplacement du plateau (22, 88, 112) et sa surface de réception dans la zone prédéfinie (32), la position de la zone prédéfinie (32) étant sensiblement fixée dans l'espace.

4. Procédé selon la revendication 3, dans lequel le déplacement du plateau (22, 88, 112) et sa surface de réception dans la zone prédéfinie (32) comprend le déplacement du plateau (22, 88, 112) dans au moins une d'une direction x, y ou z.

5. Procédé selon la revendication 3 ou la revendication 4, comprenant en outre le déplacement du plateau (22, 88, 112) dans la zone prédéfinie (32) conjointement avec une tête en regard (14) agencée pour placer le matériau fibreux (38) contre la surface de réception dudit plateau (22, 88, 112).

6. Procédé selon une quelconque revendication précédente, comprenant en outre le placement du matériau fibreux (38) contre la surface de réception pendant le déplacement du plateau (22, 88, 112) dans la zone prédéfinie (32).

7. Procédé selon une quelconque revendication précédente, comprenant en outre le support de la partie du panneau (28) créée au premier emplacement lorsque la surface de réception dudit plateau (22, 88, 112) se déplace à l'écart de cette partie du panneau (28).

8. Procédé selon une quelconque revendication précédente, comprenant en outre la création du panneau (28) adjacent à un agencement de supports mobiles (80) et le relevage de supports sélectionnés (80) pour supporter la partie du panneau (28).

9. Procédé selon une quelconque revendication précédente, comprenant en outre le roulement du plateau (22, 88, 112) et sa surface de réception contre les couches stratifiées précédemment créées du panneau (28).

10. Appareil pour fabriquer un panneau fibreux structurel (28) présentant une zone prédéfinie (32), l'appareil comprenant :
un plateau mobile (22, 88, 112) présentant une surface de réception ; et
une tête (14) pour placer le matériau fibreux (38) contre la surface de réception dudit plateau (22, 88, 112) et
la communication de l'intégrité au matériau fibreux (38) lorsqu'il est contre ladite surface de réception ;
dans lequel le plateau (22, 88, 112) et sa surface de réception sont plus petits que la zone prédéfinie (32) dudit panneau fibreux et sont positionnables à une pluralité d'emplacements dans la zone prédéfinie (32) pour créer des parties successivement adjacentes et attenantes du panneau (28), le plateau (22, 88, 112) et sa surface de réception étant configurables pour définir une forme locale du panneau (28) appropriée à chacun de ladite pluralité d'emplacements.

11. Appareil selon la revendication 10, dans lequel le plateau (22, 88, 112) est couplé à la tête (14).

12. Appareil selon la revendication 10 ou la revendication 11, dans lequel la surface de réception de plateau est une surface d'une plateforme Stewart (86).

13. Appareil selon l'une quelconque des revendications 10 à 12, dans lequel le plateau (22, 88, 112) est monté sur un bras robotique (16).

14. Appareil selon l'une quelconque des revendications 10 à 13, comprenant en outre un agencement de supports (80) pour le support de la partie du panneau (28) créée lorsque la surface de réception dudit plateau (22, 88, 112) se déplace, les supports (80) étant mobiles indépendamment entre des positions relevées et abaissées pour supporter le panneau (28) lorsqu'il est créé et pour permettre le passage du plateau (22, 88, 112) et sa surface de réception.

15. Procédé selon l'une quelconque des revendications 1 à 11 ou appareil selon l'une quelconque des revendications 10 à 14, dans lequel le panneau (28) est un stratifié et/ou est courbé et/ou est au moins une partie d'une pale d'éolienne et/ou est sa préforme.
